Europäisches Patentamt

European Patent Office

Office européen des brevets

(19)

(11) **EP 1 202 577 B1**

(12) **FASCICULE DE BREVET EUROPEEN**

(45) Date de publication et mention
de la délivrance du brevet:
**17.05.2006 Bulletin 2006/20**

(51) Int Cl.:
***H04N 7/30*** (2006.01)

(21) Numéro de dépôt: **01203713.1**

(22) Date de dépôt: **02.10.2001**

(54) **Procédé de traîtement de données vidéo**

Verfahren zur Verarbeitung von Videodateien

Method of video data processing

(84) Etats contractants désignés:
**DE ES FR GB IT**

(30) Priorité: **10.10.2000 FR 0012936**

(43) Date de publication de la demande:
**02.05.2002 Bulletin 2002/18**

(73) Titulaire: **Koninklijke Philips Electronics N.V.
5621 BA Eindhoven (NL)**

(72) Inventeurs:
• **Gesnot, Arnaud,
Société Civile S.P.I.D.
75008 Paris (FR)**
• **Miro-Sorolla, Carolina,
Société Civile S.P.I.D.
75008 Paris (FR)**
• **Caviedes, Jorge,
Société Civile S.P.I.D.
75008 Paris (FR)**

(74) Mandataire: **van Oudheusden-Perset, Laure E. et
al
Société Civile SPID
156, Boulevard Haussmann
75008 Paris (FR)**

(56) Documents cités:
**EP-A- 0 585 573          EP-A- 0 986 270**

• **PAEK H ET AL: "ON THE POCS-BASED
POSTPROCESSING TECHNIQUE TO REDUCE
THE BLOCKING ARTIFACTS IN TRANSFORM
CODED IMAGES" IEEE TRANSACTIONS ON
CIRCUITS AND SYSTEMS FOR VIDEO
TECHNOLOGY,US,IEEE INC. NEW YORK, vol. 8,
no. 3, 1 juin 1998 (1998-06-01), pages 358-367,
XP000767705 ISSN: 1051-8215**
• **TAN K T ET AL: "Measuring blocking artefacts
using harmonic analysis" ELECTRONICS
LETTERS,IEE STEVENAGE,GB, vol. 35, no. 16, 5
août 1999 (1999-08-05), pages 1322-1323,
XP006012504 ISSN: 0013-5194**
• **LIU F ET AL: "PERIODICITY, DIRECTIONALITY,
AND RANDOMNESS: WOLD FEATURES FOR
IMAGE MODELING AND RETRIEVAL" IEEE
TRANSACTIONS ON PATTERN ANALYSIS AND
MACHINE INTELLIGENCE,US,IEEE INC. NEW
YORK, vol. 18, no. 7, 1 juillet 1996 (1996-07-01),
pages 722-733, XP000620248 ISSN: 0162-8828**

**Description**

**Domaine technique de l'invention**

La présente invention concerne un procédé de traitement de données comprises dans une image numérique d'entrée.

Elle trouve son application dans la détection de blocs dans une image numérique précédemment codée puis décodée selon une technique de codage par blocs, la norme MPEG (de l'anglais Moving Pictures Expert Group) par exemple, et dans la correction des données comprises dans ces blocs afin d'atténuer les artefacts visuels causés par la technique de codage par blocs.

**Etat de la technique antérieure**

L'article intitulé "On the POCS-Based Postprocessing Technique to Reduce the Blocking Artifacts in Transform Coded Images", et publié par Hoon Paek, Rin-Chul Kim et Sang-Uk Lee, dans "IEEE Transactions on Circuits and Systems for Video Technology, vol. 8, no. 3, Juin 1998, p. 358-367" décrit un procédé de traitement de données comprises dans une image numérique d'entrée, ledit procédé comprenant les étapes de :

- calcul d'une première transformation discrète d'un premier ensemble de données,
- calcul d'une seconde transformation discrète d'un second ensemble de données adjacent au premier ensemble,
- calcul d'une transformation discrète globale d'un ensemble de données correspondant à la concaténation des premier et second ensembles, et
- détermination d'une fréquence maximale prédite à partir des données transformées issues des première et seconde transformations.

L'article intitulé "A projection-based post-processing technique to reduce blocking artifacts using a priori information on DCT coefficients of adjacent blocks", et publié par Hoon Paek et Sang-Uk Lee, dans "Proceedings of 3rd IEEE International Conference on Image Processing, vol 2, Lausanne, Switzerland, 16-19 Sept 1996, p 53-56" décrit une méthode de traitement de données comprises dans une image numérique.

Cette méthode, au contraire de la plupart des méthodes utilisées à ce jour, est appliquée dans le domaine fréquentiel, c'est à dire après l'application d'une transformation discrète sur l'image numérique d'entrée, et non dans le domaine spatial. Cette transformation discrète est, par exemple, une transformation en cosinus discrète DCT. La méthode de traitement a pour but de corriger les coefficients DCT qui correspondent à des artefacts de blocs. Afin de trouver et de supprimer les fréquences associées aux artefacts de blocs, la méthode de l'art antérieur est constituée des étapes suivantes de :

- calcul d'une première transformation en cosinus discrète U d'un segment u de N pixels avec N = 8 dans l'exemple utilisé : U = DCT[u] = {U(0), U(1), ..., U(N-1)}, avec

$$U(k) = \alpha(k) \sum_{n=0}^{N-1} u(n) \cos\left(\frac{\pi(2n+1)k}{2N}\right)$$

où k est la fréquence de la donnée transformée

$$U, k \in [0, N-1]$$

- calcul d'une seconde transformation en cosinus discrète V d'un second segment v de N pixels, adjacent au segment u : V=DCT(v)={V(0), V(1), ..., V(N-1)}, soit

$$V(k) = \alpha(k) \sum_{n=0}^{N-1} v(n) \cos\left(\frac{\pi(2n+1)k}{2N}\right)$$

- calcul d'une transformation en cosinus discrète globale W d'un segment w de 2N soit 16 pixels correspondant à la concaténation des segments u et v : W=DCT(w)={W(0), W(1), ..., W(2N-1)}, soit

$$W(k) = \frac{1}{\sqrt{2}}\, \alpha(k) \sum_{n=0}^{2N-1} v(n)\cos\left(\frac{\pi(2n+1)k}{4N}\right)$$

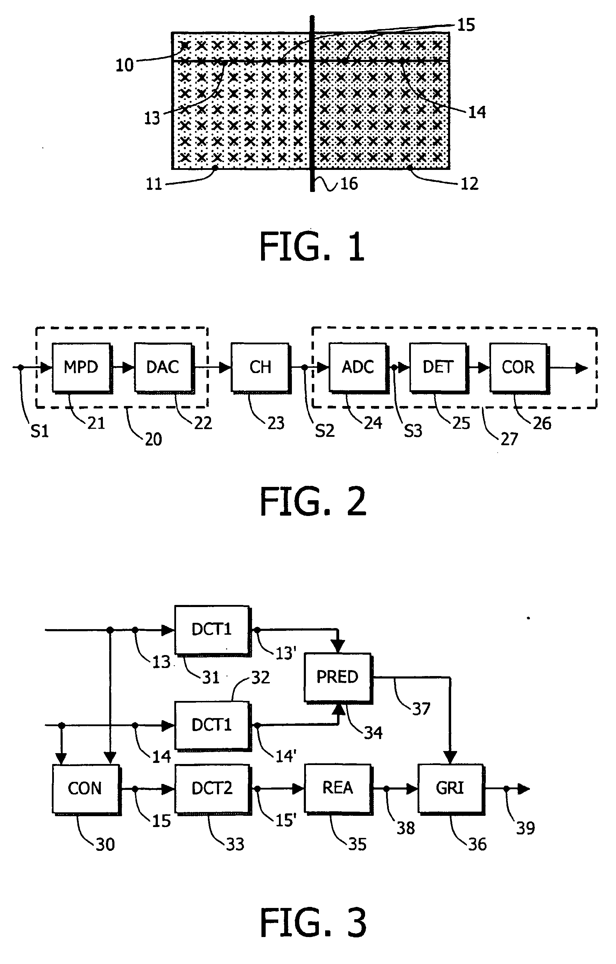

La Fig. 1 montre les deux segments adjacents u (13) et v (14), appartenant respectivement à deux blocs (11,12) de 8 x 8 pixels (10), et disposés de part et d'autre d'une frontière de blocs (16). En supposant que les contenus fréquentiels des segments u et v soient proches et que le contenu des segments est uniforme, le segment w (15) correspondant à la concaténation des premier et second segments inclut des hautes fréquences spatiales au delà de celles des segments u et v si un artefact de blocs est présent entre les segments u et v. Or, W peut s'exprimer en fonction de U et V comme suit :

$$W(k) = \begin{cases} \dfrac{1}{\sqrt{2}}\left[U\left(\dfrac{k}{2}\right) + (-1)^{\frac{k}{2}} V\left(\dfrac{k}{2}\right)\right] & k\ \text{pair} \\[2ex] \dfrac{1}{\sqrt{2}}\, \alpha(k)\displaystyle\sum_{n=0}^{N-1}\left[u(n)\cos\left(\dfrac{\pi(2n+1)k}{4N}\right) + (-1)^{\frac{k-1}{2}} v(n)\sin\left(\dfrac{\pi(2n+1)k}{4N}\right)\right] & k\ \text{impair} \end{cases}$$

La fréquence maximale prédite kwpred de W dépend théoriquement, c'est à dire si aucun artefact de blocs n'était présent, des fréquences maximales kumax et kvmax de U et V, comme suit :

$$kwpred = 2.\max(\,kumax,\ kvmax\,) + 2$$

$$kumax = \max(\,k\in\{0,...,N\text{-}1\}\ /\ U(k) \neq 0\,)$$

$$kvmax = \max(\,k\in\{0,...,N\text{-}1\}\ /\ V(k) \neq 0\,)$$

et max est la fonction qui donne le maximum de k parmi un ensemble de valeurs déterminées.

Les coefficients W(k) correspondant à des fréquences k impaires supérieures à la fréquence maximale prédite kwpred sont assimilés à des artefacts de blocs et sont de ce fait mis à zéro.

## Exposé de l'invention

La présente invention a pour but de proposer une méthode de traitement de données permettant d'avoir une meilleure qualité visuelle de l'image numérique affichée à l'écran. L'invention prend en compte les considérations suivantes.

Une image appartenant à un signal numérique vidéo est décomposée en blocs de 8 lignes de 8 pixels afin d'être codée selon la norme MPEG, le premier bloc de l'image commençant à la position (0,0). En raison des conversions numérique - analogique et analogique - numérique et suite à l'utilisation éventuelle d'algorithmes de pré-traitement du signal numérique vidéo, une image originale appartenant audit signal peut se retrouver décalée de quelques pixels et la taille d'une grille correspondant aux blocs MPEG peut se trouver modifiée. Or, l'image d'entrée disponible à l'entrée d'un poste de télévision ne contient pas d'informations permettant de déterminer le changement d'origine de l'image décodée ni le changement de taille de la grille correspondant aux blocs après décodage. La méthode de traitement de données selon l'art antérieur se révèle alors inefficace si elle est appliquée telle qu'elle car elle suppose que l'origine de l'image décodée est (0,0) et que les blocs sont de taille 8 x 8 pixels.

Afin de pallier ces inconvénients, le procédé de traitement de données comprises dans une image numérique d'entrée selon la présente invention est remarquable en ce qu'il comprend une étape de détermination d'une fréquence maximale réelle à partir des données transformées issues de la transformation globale, et une étape de détection de grille à partir d'une comparaison entre la fréquence maximale réelle et la fréquence maximale prédite sur une portion de ladite image numérique d'entrée.

Cette étape de détection de grille permet de déterminer si l'image numérique d'entrée a été codée ou non selon une technique de codage par blocs, la taille de la grille correspondant aux blocs de codage, initialement de 8 lignes de 8 pixels dans le cas de la norme MPEG, après un éventuel ré-échantillonnage de l'image lors du décodage, donnant alors des blocs de 8 lignes de 10, 12, ou 16 pixels dans le cas de ladite norme.

**Brève description des dessins**

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés dans lesquels :

- la Fig. 1 illustre la méthode de traitement de données selon l'art antérieur,
- la Fig. 2 est un diagramme représentant une méthode de traitement de données selon l'invention pour traiter un signal numérique vidéo,
- la Fig. 3 est un diagramme représentant une méthode de traitement de données selon l'invention pour détecter les séquences d'images codées selon une technique de codage par blocs,
- la Fig. 4 est un organigramme de l'étape de détection d'images codées selon une technique de codage par blocs, et
- la Fig. 5 est un diagramme représentant une méthode de traitement de données selon l'invention pour corriger les images numériques codées.

**Exposé détaillé d'au moins un mode de réalisation de l'invention**

La présente invention concerne une méthode de traitement de données comprises dans un signal numérique vidéo d'entrée, ladite méthode étant destinée à améliorer la qualité visuelle dudit signal numérique vidéo lorsque celui a été précédemment codé selon une technique de codage par blocs.

La Fig. 2 illustre une chaîne complète de traitement d'un signal numérique vidéo comprenant des images numériques codées (S1). Ladite chaîne comprend un ensemble décodeur (20) destiné à transmettre via un canal CH (23) une image analogique décodée (52) à un récepteur de télévision (27). L'ensemble décodeur comprend un décodeur MPD (21) permettant de décoder le signal numérique vidéo codé selon la technique de codage par blocs, et un convertisseur numérique - analogique DAC (22). Le récepteur de télévision comprend un convertisseur analogique - numérique ADC (24) destiné à fournir une image numérique d'entrée (53) à un dispositif DET (25) permettant de détecter si ladite image numérique d'entrée a été codée selon une technique de codage par blocs. Un dispositif de correction ou de post-traitement COR (26) (en anglais "post-processing"), par opposition à un pré-traitement du signal qui aurait lieu avant le codage dudit signal, permet alors d'améliorer la qualité visuelle de l'image numérique en vue de son affichage à l'écran. Le post-traitement est appliqué en fonction des données fournies par le dispositif de détection.

Le signal vidéo disponible à l'entrée d'un poste de télévision comprend des images constituées de pixels mais ne contient pas d'informations concernant les éventuels paramètres de codage et de décodage dudit signal si ce dernier a été précédemment codé selon une technique de codage par blocs. C'est pourquoi le dispositif de détection est destiné à déterminer la taille et la position d'une grille correspondant aux blocs utilisés par la technique de codage qui ont pu être ré-échantillonnés lors du décodage. Une application convenable du dispositif de correction dépend en effet de la détection et de la localisation de la grille.

La méthode de traitement de données a été développée plus particulièrement dans le cadre d'images numériques codées puis décodées selon la norme MPEG. Elle reste néanmoins applicable pour tout autre signal numérique vidéo codé puis décodé selon une technique de codage par blocs telle que H.261 ou H.263 par exemple.

Une image appartenant à un signal numérique vidéo codé selon la norme MPEG se décompose en blocs de 8 lignes de 8 pixels, le premier bloc de l'image commençant à la position (0,0). En raison des conversions numérique - analogique et analogique - numérique et suite à l'utilisation éventuelle d'algorithmes de pré-traitement du signal numérique vidéo, une image originale appartenant audit signal peut se retrouver décalée de quelques pixels. D'autre part, l'image originale peut être codée selon différents formats horizontaux de codage afin de conserver une bonne qualité visuelle pour de faibles débits de transmission. Dans ce cas, l'image originale est sous-échantillonnée horizontalement avant d'être codée puis sur-échantillonnée horizontalement lors du décodage afin de retrouver son format initial. Il en résulte une modification de la taille de la grille due au sur-échantillonnage, le codage étant toujours effectué sur des blocs de 8 lignes de 8 pixels.

Afin de remédier à cet inconvénient, la méthode de traitement de données selon l'invention a pour but de détecter les signaux numériques vidéo codés selon la technique de codage par blocs. Pour cela, ladite méthode, illustrée par la Fig. 3, comprend les étapes suivantes :

- Une étape de calcul d'une première transformation discrète DCT1 (31), une transformation en cosinus par exemple, d'un premier ensemble de données u (13). Dans le mode de réalisation préféré, cet ensemble de données est constitué par les valeurs de luminance de N pixels, avec N = 8 dans notre exemple. La méthode de traitement de données est appliquée selon une dimension, à savoir selon une ligne de N pixels afin de détecter la largeur de la grille et selon une colonne de N pixels afin de détecter la hauteur de ladite grille.

- Une étape de calcul d'une seconde transformation discrète DCT1 (32) d'un second ensemble de données v (14) adjacent au premier ensemble. Cet ensemble est également constitué de N pixels dans le mode de réalisation préféré.

- Une étape de calcul d'une transformation discrète globale DCT2 (33) d'un ensemble de données w (15) correspondant à la concaténation CON (30) des premier et second ensembles, et constitué par conséquent de 2N pixels dans notre cas.

- Une étape de détermination PRED (34) d'une fréquence maximale prédite kwpred (37), à partir des données transformées U (13') et V (14') issues des première (31) et seconde (32) transformations DCT1, calculée de la façon suivante :

$$kwpred = 2.max( kumax, kvmax ) + 2$$

avec

$$kumax = max( k \in \{0,...,N\text{-}1\} / abs(U(k)) > T ),$$

$$kvmax = max( k \in \{0,...,N\text{-}1\} / abs(V(k)) > T ),$$

abs(x) est la fonction donnant la valeur absolue de x, et
où T est un seuil supérieur ou égal à zéro

- Une étape de détermination REA (35) d'une fréquence maximale réelle kwmax (38), à partir des données transformées W (15') issus de la transformation globale, calculée de la façon suivante :

$$kwmax = max( k \in \{0,...,2N\text{-}1\} / abs(W(k)) > T )$$

- Une étape de détection GRI (36) permettant de déterminer si l'image numérique d'entrée a été codée selon une technique de codage par blocs, à partir d'une comparaison entre la fréquence maximale réelle kwmax (38) et la fréquence maximale prédite kwpred (37) sur une portion de l'image numérique d'entrée. Dans le mode de réalisation préféré, ladite portion est constituée par une ligne toutes les vingt lignes d'une image pour la détection de la largeur de la grille et par une colonne toutes les vingt colonnes de ladite image pour la détection de la hauteur de la grille. Une telle méthode nécessite de faibles ressources de calcul tout en assurant une bonne qualité de détection. Les valeurs kwpred(j) et kwmax(j) sont ensuite calculées pour chaque pixel j de la ligne ou de la colonne en itérant le calcul des transformations DCT1 et DCT2 après chaque incrémentation d'un pixel. L'étape de détection indique alors si une grille a été détectée et dans l'affirmative la taille et la localisation de cette grille (39).

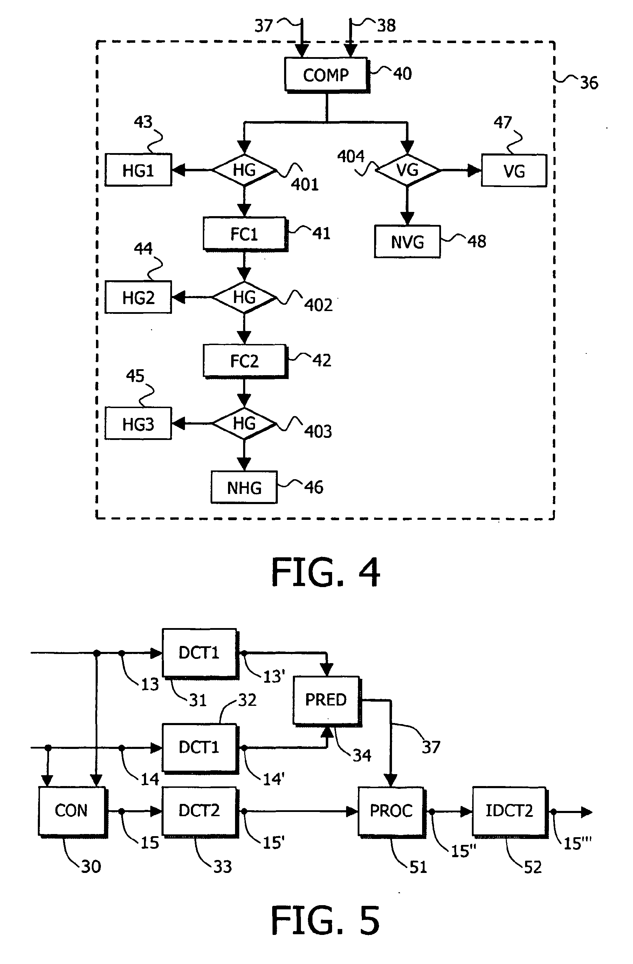

La Fig. 4 est un organigramme illustrant plus précisément l'étape de détection (36). Ladite étape de détection comprend une sous-étape de calcul COMP (40) d'une grandeur X(j) telle que :

$$X(j) = kwpred(j) - kwmax(j).$$

Sur une frontière de blocs, la valeur de X(j) est supérieure à un seuil XT. Dans le mode de réalisation préféré, la valeur du seuil XT a été fixé à 4. Afin de détecter la position et la taille de la grille, les valeurs j de X satisfaisant cette condition sont retenues et un histogramme de ces valeurs modulo 8 est tracé. La grille est détectée si une valeur de l'histogramme est importante et nettement plus représentée que les 7 autres , soit dans le mode de réalisation préféré, si :

- le premier maximum de l'histogramme est supérieur à 1 plus 3 fois le second maximum dudit histogramme, et

- le premier maximum de l'histogramme est supérieur à 10.

Un premier test HG (401) est alors effectué dans la direction horizontale afin de déterminer si une grille d'une largeur de 8 pixels a été détectée. Si tel est le cas, alors l'étape de détection est terminée, fournissant le résultat HG1 (43) indiquant qu'une grille de largeur de 8 ou de 16 pixels a été détectée, le dernier cas correspondant à un format d'image 1/2. Dans le cas contraire, une première sous-étape de conversion de format FC1 (41) est effectuée afin de passer d'une image d'origine de largeur 720 pixels à une image de largeur 540 pixels, soit un format 3/4 d'image. Pour cela, la ligne d'une image est sur-échantillonnée par un facteur 3 en rajoutant deux zéros entre deux pixels de l'image d'origine et en filtrant à l'aide d'un filtre F1. A titre d'exemple, le filtre F1 comprend 19 coefficients et est le suivant :

$$F1 = [9,6,0,-21,-9,0,103,220,295,330,295,220,103,0,-9,-21,0,6,9]$$

Le signal ainsi obtenu est ensuite sous-échantillonné en sélectionnant un pixel sur quatre.

La méthode de détection de grille est alors de nouveau appliquée avec le signal numérique vidéo converti. Un deuxième test HG (402) est alors effectué dans le sens horizontal afin de déterminer si une grille d'une largeur de 8 pixels a été détectée dans l'image après conversion de format. Si tel est le cas, alors l'étape de détection est terminée, fournissant le résultat HG2 (44) indiquant qu'une grille d'une largeur de 10 pixels a été détectée dans l'image initiale avant la conversion de format. Dans le cas contraire, une seconde sous-étape de conversion de format d'image FC2 (42) est effectuée afin de passer d'une image d'origine de largeur 720 pixels à une image de largeur 480 pixels, soit un format 2/3 d'image. Pour cela, la ligne d'une image est sur-échantillonnée par un facteur 2 en rajoutant un zéro entre deux pixels de l'image d'origine et en filtrant à l'aide d'un filtre F2. A titre d'exemple, le filtre F2 comprend 15 coefficients et est le suivant :

$$F2 = [-3,-37,-41,-20,52,163,248,300,248,163,52,-20,-41,-37,-3]$$

Le signal ainsi obtenu est ensuite sous-échantillonné en sélectionnant un pixel sur trois.

La méthode de détection de grille est alors de nouveau appliquée avec le signal numérique vidéo ainsi converti. Un troisième test HG (403) est alors effectué dans le sens horizontal afin de déterminer si une grille d'une largeur de 8 pixels a été détectée dans l'image après conversion de format. Si tel est le cas, alors l'étape de détection est terminée, fournissant le résultat HG3 (45) indiquant qu'une grille d'une largeur de 12 pixels a été détectée dans l'image d'origine. Dans le cas contraire, le résultat NHG (46) correspond au fait qu'aucune grille n'a été détectée dans la direction horizontale.

Parallèlement, la méthode de détection de grille est appliquée à l'image numérique d'entrée dans la direction verticale. Un test VG (404) est effectué afin de déterminer si une grille d'une hauteur de 8 pixels a été détectée. Si tel est le cas, alors l'étape de détection est terminée, fournissant le résultat VG (47) indiquant qu'une grille d'une hauteur de 8 pixels a été détectée. Dans le cas contraire, le résultat NVG (48) correspond au fait qu'aucune grille n'a été détectée dans la direction verticale.

La méthode de détection de grille a été décrite dans le cas des principaux formats d'image utilisés par la norme MPEG. Elle ne se limite cependant pas à ces formats, d'autres formats d'image pouvant être pris en compte par cette méthode sans pour autant sortir du cadre de l'invention.

La méthode de détection qui vient d'être décrite permet de détecter si un signal vidéo reçu par un téléviseur a été codé selon une technique de codage par blocs. Ladite méthode indique également la taille et la localisation de la grille correspondant aux blocs sur la base desquels le codage a été effectué. Une méthode de post-traitement est alors appliquée en fonction des données fournies par la méthode de détection, de préférence sur l'image après conversion de format, ceci afin de traiter des blocs de 8 lignes de 8 pixels. L'image est ensuite reconvertie au format plein écran (i.e. 720 pixels) après traitement en vue de son affichage à l'écran.

Selon un mode avantageux de réalisation, la méthode de post-traitement utilise des étapes communes à la méthode de détection selon invention. La figure 5 décrit une telle méthode de post-traitement de données numériques vidéo. Ladite méthode comprend :

- une étape de calcul d'une première transformation discrète DCT1 (31) d'un premier ensemble de N données u (13),
- une étape de calcul d'une seconde transformation discrète DCT1 (32) d'un second ensemble de N données v (14) adjacent au premier ensemble,
- une étape de calcul d'une transformation discrète globale DCT2 (33) d'un ensemble de 2N données w (15) correspondant à la concaténation CON (30) des premier et second ensembles et fournissant un ensemble de données transformées W (15').

- une étape de détermination PRED (34) d'une fréquence maximale prédite kwpred (37), à partir des données transformées U (13') et V (14') issues des première (31) et seconde (32) transformations DCT1, calculée de la façon suivante :

$$kwpred = 2.max( kumax, kvmax ) + 2$$

avec

$$kumax = max( k \in \{0,...,N\text{-}1\} / abs(U(k)) > T )$$

$$kvmax = max( k \in \{0,...,N\text{-}1\} / abs(V(k)) > T )$$

où T est un seuil différent de zéro.

L'étape de détermination selon l'invention effectue un raffinement du calcul de la fréquence maximale critique à partir de l'introduction du seuil T. Ce raffinement permet une correction plus efficace de l'image. La valeur du seuil T est fonction du nombre de pixels appartenant aux ensembles de données u et v.

La méthode de post-traitement comprend également une étape de correction PROC (51) comprenant ellemême une sous-étape de détection de contours naturels à partir des valeurs de données initiales u et v et transformées U et V. Cette sous-étape permet de distinguer lesdits contours naturels de frontières de blocs dues à des artefacts de codage. Pour cela, un contour naturel est détecté si deux conditions sont remplies :

➢ les valeurs moyennes $\bar{u}$ et $\bar{v}$ des ensembles de données u et v de part et d'autres d'une frontière de blocs sont différentes d'une valeur importante, supérieure à M, soit : $|\bar{u}\text{-}\bar{v}| > M$ , et
➢ les ensembles de données u et v sont de faible activité ce qui se traduit par le fait que les valeurs de kumax et kvmax sont faibles et inférieures à k0, soit kumax < k0 et kvmax < k0.

L'étape de correction PROC comprend également une sous-étape de troncation par mise à zéro des données transformées impaires W (15') issues de la transformation discrète globale dont la fréquence est supérieure à la fréquence maximale prédite, fournissant des données tronquées (15").

La méthode de post-traitement comprend enfin une étape de calcul de la transformation discrète inverse IDCT2 (52) des données tronquées, fournissant des données décodées (15''') qui sont ensuite destinées à être affichées à l'écran.

A la différence de la méthode de détection précédemment décrite qui peut être appliquée à une partie de l'image, quelques lignes et quelques colonnes par exemple, la méthode de post-traitement est appliquée de préférence à l'image entière.

De plus, cette méthode de post-traitement peut être appliquée aussi bien après la méthode de détection que directement à la sortie d'un décodeur (21), les paramètres fournis par le décodeur permettant de connaître la position de la grille correspondant aux blocs de codage.

La méthode de post-traitement comprend également deux phases successives dont l'ordre d'application est indifférent :

- la correction des artefacts verticaux, correspondant à un traitement des données par lignes,
- la correction des artefacts horizontaux, correspondant à un traitement des données par colonnes.

Enfin, dans le cas de séquences d'images entrelacées, l'image est désentrelacée formant ainsi deux trames. Chacune des deux trames se voit ensuite appliquer la méthode de post-traitement. Enfin, les deux trames sont réentrelacées après traitement.

Dans un premier mode de réalisation de la méthode de post-traitement selon l'invention, les ensembles de données u (13) et v (14) contiennent les valeurs de luminance associées à N = 8 pixels consécutifs. L'étape de détermination PRED (34) de la fréquence maximale prédite kwpred (37), à partir des données transformées U (13') et V (14') issues des première (31) et seconde (32) transformations DCT1, est alors effectuée avec un seuil horizontal Th = 5 pour la correction des artefacts verticaux et avec un seuil vertical Tv = 5 en mode progressif (i.e. non entrelacé) et Tv = 3 en mode entrelacé pour la correction des artefacts horizontaux. En effet, dans ce dernier cas, la correction des artefacts horizontaux est réalisée en traitant des ensembles de données u et v correspondant à une résolution moitié de la résolution horizontale, ce qui explique la valeur du seuil vertical par rapport à celle du seuil horizontal. En ce qui concerne la sous-étape de détection des contours naturels, les valeurs de M et de k0 sont fixées de préférence à 30 et 3.

Dans un second mode de réalisation de la méthode de post-traitement selon l'invention, les ensembles de données u (13) et v (14) contiennent les valeurs de luminance associées à N = 4 pixels consécutifs. Les valeurs des seuils sont alors modifiées en conséquence avec, par exemple, Th = 10, Tv = 5 en mode entrelacé, M = 25 et k0 = 1. Une telle simplification permet de réduire la complexité de l'algorithme de traitement mais peut diminuer sensiblement l'efficacité de la correction.

Enfin, dans un troisième mode de réalisation de la méthode de post-traitement selon l'invention, les ensembles de données u (13) et v (14) contiennent chacun les valeurs de luminance associées à N = 8 pixels consécutifs. Cependant, les ensembles de données u (13) et v (14) sont respectivement subdivisés en deux sous-ensembles u', u" d'une part et v', v" d'autre part, les sous-ensembles u', v' contenant les données de rang impair et les sous-ensembles u" et v" contenant les données de rang pair.

Les étapes de calcul des transformations discrètes (31,32,33) sont appliquées aux sous-ensembles u', v' d'une part et u", v" d'autre part fournissant respectivement les données transformées U', V', W' d'une part et U", V", W" d'autre part.

L'étape de détermination PRED (34) fournit en parallèle les fréquences maximales prédites kw'pred et kw"pred (37) calculée de la façon suivante :

$$kw'pred = 2.max( ku'max, kv'max ) + 2$$

avec

$$ku'max = max( k \in \{0,...,N\text{-}1\} \,/\, abs(U'(k)) > Th\ ou\ Tv )$$

$$kv'max = max( k \in \{0,...,N\text{-}1\} \,/\, abs(V'(k)) > Th\ ou\ Tv )$$

$$kw"pred = 2.max( ku"max, kv"max ) + 2$$

avec

$$ku"max = max( k \in \{0,...,N\text{-}1\} \,/\, abs(U"(k)) > Th\ ou\ Tv )$$

$$kv"max = max( k \in \{0,...,N\text{-}1\} \,/\, abs(V"(k)) > Th\ ou\ Tv )$$

où, par exemple, Th = 10 et Tv = 5 en mode entrelacé.

L'étape de correction PROC (51) est alors appliquée indépendamment aux données transformées W' et W" avec :

- une sous-étape de détection de contours naturels telle que, par exemple, :

$$\left| \overline{u}'-\overline{v}' \right| > 25 \,,\ ku'max < 1\ et\ kv'max < 1$$

$$ou\ \left| \overline{u}''-\overline{v}'' \right| > 25 \,,\ ku"max < 1\ et\ kv"max < 1$$

- une sous-étape de troncation des données transformées W' ou W" issues de la transformation discrète globale dont la fréquence est supérieure à la fréquence maximale prédite kw'pred ou kw"pred.

Ce dernier mode de réalisation permet à la fois de réduire la complexité de traitement tout en conservant l'efficacité de la correction du premier mode de réalisation.

La description ci-dessus en référence aux Fig. 2 à 5 illustre l'invention plus qu'elle ne la limite. Il est évident qu'il existe d'autres alternatives qui rentrent dans la portée des revendications ci-jointes.

Il existe de nombreuses manières pour implémenter les fonctions décrites au moyen de logiciel (en anglais "software"). A cet égard, les Fig. 2 à 5 sont très schématiques, chaque figure représentant un mode de réalisation seulement. Donc, bien qu'une figure montre différentes fonctions sous forme de blocs séparés, ceci n'exclut pas qu'un seul logiciel effectue plusieurs fonctions. Ceci n'exclut pas non plus qu'une fonction puisse être effectuée par un ensemble de logiciels.

Il est possible d'implémenter ces fonctions au moyen d'un circuit de récepteur de télévision, ou d'un circuit de récepteur - décodeur numérique de télévision (en anglais "set top box") dans le cas de la méthode de post-traitement, ledit circuit étant convenablement programmé. Un jeu d'instructions contenu dans une mémoire de programmation peut provoquer le circuit à effectuer différentes opérations décrites précédemment en référence aux Fig. 2 à 5. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou de ces étapes.

**Revendications**

1.    Procédé de traitement de données comprises dans une image numérique d'entrée, ledit procédé comprenant les étapes de :

    - calcul d'une première transformation discrète (31) d'un premier ensemble de données (13),
    - calcul d'une seconde transformation discrète (32) d'un second ensemble de données (14) adjacent au premier ensemble,
    - calcul d'une transformation discrète globale (33) d'un ensemble de données (15) correspondant à la concaténation (30) des premier et second ensembles, et
    - détermination (34) d'une fréquence maximale prédite (37) à partir des données transformées issues des première et seconde transformations (13',14'),

    ledit procédé de traitement étant **caractérisé en ce qu'**il comprend en outre les étapes de :

    - détermination (35) d'une fréquence maximale réelle (38) à partir des données transformées issues de la transformation globale (15'), et
    - détection (36) de grille (39) à partir d'une comparaison entre la fréquence maximale réelle et la fréquence maximale prédite sur une portion de ladite image numérique d'entrée.

2.    Procédé de traitement de données selon la revendication 1, **caractérisé en ce qu'**il comprend une étape de correction de l'image numérique d'entrée si une grille (39) a été détectée, l'étape de correction étant appliquée en tenant compte d'une taille et d'une position de ladite grille.

3.    Procédé de traitement de données selon la revendication 1, comprenant :

    - une étape de troncation (51) des données transformées issues de la transformation discrète globale (15') dont la fréquence est supérieure à la fréquence maximale prédite,
    - les premier et second ensembles u (13) et v (14) de données étant respectivement subdivisés en deux sous-ensembles u', u" d'une part et v', v" d'autre part, les sous-ensembles u', v' contenant les données de rang impair et les sous-ensembles u" et v" contenant les données de rang pair,
    - les étapes de calcul des transformations discrètes (31,32,33), de détermination (34) de la fréquence maximale prédite et de troncation (51) des données transformées issues de la transformation discrète globale étant appliquées aux sous-ensembles u', v' d'une part et u", v" d'autre part.

4.  Produit "programme d'ordinateur" chargeable dans la mémoire d'un récepteur - décodeur numérique de télévision, et comprenant le code de logiciel pour l'exécution des étapes du procédé de traitement de données selon l'une des revendications 1 à 3 lorsque ledit programme est exécuté sur le récepteur - décodeur numérique de télévision.

**Claims**

1.  A method of processing data comprised in a digital input image, said method comprising the steps of:

    - calculating a first discrete transform (31) of a first set of data (13),
    - calculating a second discrete transform (32) of a second set of data (14) adjacent to the first set,
    - calculating an overall discrete transform (33) of a set of data (15) corresponding to the concatenation (30) of the first and the second set, and
    - determining (34) a predicted maximum frequency (37) on the basis of the transformed data resulting from the first and the second transform (13',14'),

    said processing method being **characterized in that** it further comprises the steps of:

    - determining (35) a real maximum frequency (38) on the basis of the transformed data (15') resulting from the overall transform, and
    - detecting (36) a grid (39) by means of a comparison between the real maximum frequency and the predicted maximum frequency for a portion of said digital input image.

2.  A method of processing data as claimed in claim 1, **characterized in that** it comprises a step of correcting the digital input image if a grid (39) has been detected, the correction step being applied while taking a size and a position of said grid into account.

3.  A method of processing data as claimed in claim 1, comprising:

    - a step of truncating (51) the transformed data resulting from the overall discrete transform (15') and having a frequency higher than the predicted maximum frequency,
    - the first and the second set of data u (13) and v (14) being divided into two sub-sets u', u" and v', v", respectively, the sub-sets u', v' containing the data of odd rank and the sub-sets u" and v" containing the data of even rank,
    - the steps of calculating the discrete transforms (31, 32, 33), of determining (34) the predicted maximum frequency, and of truncating (51) the transformed data resulting from the overall discrete transform being applied to the sub-sets u', v', on the one hand, and u", v", on the other hand.

4.  A computer program product loadable into the memory of a television set-top box and comprising the software for executing the steps of the method of processing data as claimed in any one of claims 1 to 3 when said program is performed on the television set-top box.

**Patentansprüche**

1.  Datenverarbeitungsverfahren enthalten in einem digitalen Eingangsbild, wobei das besagte Verfahren die Schritte enthält zur:

    - Berechnung einer ersten diskreten Transformation (31) einer ersten Dateneinheit (13),
    - Berechnung einer zweiten diskrete Transformation (32) einer zweiten Dateneinheit (14), angrenzend an die erste Einheit,
    - Berechnung einer globalen diskreten Transformation (33) einer Dateneinheit (15) entsprechend der Verkettung (30) der ersten und zweiten Einheiten, und
    - Bestimmung (34) einer vorausgesagten Höchstfrequenz (37) anhand der transformierten Daten, kommend aus den ersten und zweiten Transformationen (13',14'),

    wobei das besagte Verarbeitungsverfahren **dadurch gekennzeichnet ist, dass** es außerdem die Schritte enthält zur:

- Bestimmung (35) einer reellen Höchstfrequenz (38) anhand der transformierten Daten, erhalten nach der globalen Transformation (15'), und
- Detektion (36) des Rasters (39) anhand eines Vergleichs zwischen der reellen Höchstfrequenz und der vorausgesagten Höchstfrequenz auf einem Teil des besagten digitalen Eingangsbilds.

2. Datenverarbeitungsverfahren nach Anspruch 1, **dadurch gekennzeichnet, dass** es einen Schritt zur Korrektur des digitalen Eingangsbildes enthält, wenn ein Raster (39) erkannt wurde, wobei der Schritt zur Korrektur unter Berücksichtigung einer Größe und einer Position des besagten Rasters angewendet wird.

3. Datenverarbeitungsverfahren nach Anspruch 1, mit:

- Einem Schritt zum Stutzen (51) der transformierten Daten, erhalten nach der globalen diskreten Transformation (15'), wobei die Frequenz höher ist als die vorausgesagte Höchstfrequenz,
- den ersten und zweiten Einheiten u (13) und v (14) der Daten, die respektive subdividiert werden in zwei Untereinheiten u', u" einerseits und v', v" andererseits, wobei die Untereinheiten u', v' die Daten ungeraden Rangs enthalten und die Untereinheiten u" und v" die Daten geraden Rangs enthalten,
- den Schritten zur Berechnung der diskreten Transformationen (31,32,33) zur Bestimmung (34) der vorausgesagten höchsten Frequenz und zum Stutzen (51) der transformierten Daten, erhalten nach der globalen diskreten Transformation, die auf die Untereinheiten u', v' einerseits und u", v" andererseits angewendet werden.

4. Produkt der Reihe "Computerprogramm", in den Speicher eines digitalen Empfangsdecoders eines Fernsehers ladbar, mit dem Softwareprogrammcode für die Ausführung der Schritte des Datenverarbeitungsverfahrens nach einem der Ansprüche 1 bis 3, wenn das besagte Programm am digitalen Empfangsdecoder des Fernsehens ausgeführt wird. Bildtext einfügen

# FIG. 1

# FIG. 2

# FIG. 3

FIG. 4

FIG. 5